# EUROPÄISCHE PATENTSCHRIFT

(11) **EP 2 640 942 B1**
(45) Veröffentlichungstag und Bekanntmachung des Hinweises auf die Patenterteilung: **29.03.2017**
(21) Anmeldenummer: 11773694.2
(22) Anmeldetag: 21.10.2011
(51) Int. Cl.: F01N 3/28, F01N 3/20, F01N 13/08

(54) **ABGASANLAGE**
EXHAUST GAS SYSTEM
DISPOSITIF D'ÉCHAPPEMENT

(30) Priorität: 17.11.2010 DE 102010051691
(43) Veröffentlichungstag der Anmeldung: 25.09.2013
(73) Patentinhaber: Bayerische Motoren Werke Aktiengesellschaft, 80809 München (DE)
(72) Erfinder: KRENN, Christian, 3335 Weyer (AT)
(86) Internationale Anmeldenummer: PCT/EP2011/005313
(87) Internationale Veröffentlichungsnummer: WO 2012/065676

(56) Entgegenhaltungen:
- EP-A2- 1 493 482
- WO-A2-2009/024815
- DE-A1- 4 336 632
- DE-A1- 19 834 541
- US-A1- 2010 083 643

## Beschreibung

Die Erfindung betrifft eine Abgasanlage einer Verbrennungskraftmaschine, insbesondere eines Fahrzeugs, mit einem Abgasführungskanal, zumindest einem im Abgasführungskanal angeordneten Einleger zur Reinigung des Abgases, einer im Strömungsweg vor dem Einleger angeordneten Einspritzanlage und einem zwischen Einspritzanlage und Einleger angeordneten Verwirbelungselement, wobei im Abgasführungskanal zwischen Verwirbelungselement und Einleger ein Strömungsgleichrichter vorgesehen ist.

In Abgasanlagen für Fahrzeuge sind zur Reinigung der Abgase Einleger, beispielsweise Katalysatoren oder Dieselpartikelfilter mit vorgeschalteten Katalysatoren angeordnet, die Schadstoffe aus dem Abgas filtern. Diese müssen in regelmäßigen Abständen regeneriert werden, da ansonsten ihr Strömungswiderstand übermäßig stark ansteigt bzw. ihre Wirksamkeit nachlässt. Diese Regeneration erfolgt im Allgemeinen durch ein Freibrennen, also eine starke Temperaturerhöhung des Abgases, die durch die Zuführung eines Oxidationsmittelsin den Abgasstrom ausgelöst wird. Um Stickoxide (NOx) aus dem Abgas zu entfernen muss ein Reduktionsmittel eingespritzt werden. Dies kann beispielsweise eine Harnstoff-Wasser-Lösung (HWL) sein.

Die Einspritzanlage für ein solches Oxidations- oder Reduktionsmittel ist in Strömungsrichtung in einem ausreichenden Abstand vor den allgemein als Einlegern bezeichneten Katalysatoren oder Dieselpartikelfiltern angeordnet, sodass vor dem Auftreffen des Abgasstroms auf den Einleger eine ausreichende Durchmischung des Oxidations- oder Reduktionsmittels mit dem Abgas erfolgen kann. Im Idealfall ist das Oxidations- oder Reduktionsmittel beim Auftreffen auf den Einleger vollständig mit dem Abgas vermischt, so dass das Oxidations- oder Reduktionsmittel den Einleger gleichmäßig über den gesamten Querschnitt verteilt durchströmen und diesen regenerieren kann.

Um die Mischstrecke zwischen Einspritzanlage und Einleger zu verkürzen bzw. eine zuverlässige Durchmischung zu erreichen, sind aus dem Stand der Technik Verwirbelungselemente bekannt, die in Strömungsrichtung hinter der Einspritzanlage angeordnet sind. Solche Verwirbelungselemente erzeugen im Abgasstrom starke Verwirbelungen durch die eine schnellere Durchmischung von Abgas und Oxidations- oder Reduktionsmittel erfolgt.

Aufgrund der durch das Verwirbelungselement erzeugten Turbulenzen kann es aber zu Druckdifferenzen und Rückströmungen des Abgasgemisches kommen. Diese treten vor allem im Bereich unmittelbar vor dem Einleger auf, da sich die Abgasanlage in diesem Bereich aufgrund des großen Querschnitts des Einlegers aufweitet. Aufgrund dieser Turbulenzen kann es auch bei einer guten Durchmischung des Oxidations- oder Reduktionsmittels mit dem Abgas zu einer ungleichmäßigen Verteilung des Abgasstroms und somit des Oxidations- oder Reduktionsmittels über den Querschnitt kommen, wodurch der Einleger nicht gleichmäßig durchströmt wird. Eine vollständige Regeneration ist aufgrund dieser ungleichmäßigen Verteilung des Oxidations- oder Reduktionsmittels nicht sichergestellt.

Aus der DE 43 36 632 A1 ist eine Einrichtung zur Kontaktierung eines Strömungsmediums mit einem eine Reaktion induzierenden Material, die in einem Strömungskanal angeordnete, in Serie geschaltete Reaktionsmodule mit dem die Reaktion induzierenden Material umfasst, bei der die Reaktionsmodule nebeneinander angeordnet sind und die Strömungsrichtung des Strömungsmediums in unmittelbar benachbarten Reaktionsmodulen gegensinnig ist, um eine Einrichtung zur Verminderung von in einem Strömungsmedium enthaltenen Schadstoffen, wie zum Beispiel Stickoxiden, anzugeben, die eine geringe Bauhöhe aufweist und bei der gleichzeitig ein Sedimentieren von Staubteilchen in den Gaskanälen des eine Reaktion induzierenden Materials verhindert wird.

Gemäß der DE 43 36 632 A1 sind in Strömungsrichtung eines stark mit Staub beladenen Rauchgases einer Verbrennungsanlage, die Stein- oder Braunkohle als Energieträger verwendet, zunächst eine Eindüsvorrichtung für Ammoniak und eine Mischvorrichtung in der Rauchgasleitung eingebaut. Im Anschluss daran sind nach einer kurzen Wegstrecke im Strömungskanal Strömungsleitbleche eingebaut, die die waagrechte Strömungsrichtung des Rauchgases in eine Richtung parallel zur Schwerkraft umlenken. Ein sich daran anschließendes Reaktionsmodul umfasst zunächst Strömungsgleichrichter, in Modulen angeordnete und plattenförmige DeNOx-Katalysatoren und weitere am Austritt der DeNOx-Katalysatoren angeordnete Strömungsgleichrichter. Daran anschließend ist der Rauchgaskanal als Umlenkbereich ausgeführt, indem die Strömungsrichtung des Rauchgases von parallel zur Schwerkraft nach antiparallel zur Schwerkraft gedreht wird. Der Umlenkbereich des Rauchgaskanals ist als Staubsammler ausgebildet, der eine Staubabzugsleitung mit diskontinuierlich zu öffnenden Ventil umfasst.

Aus der WO 2009/024815 A2 ist ein Abgassystem bekannt mit einem Strömungsweg aufweisend eine Emissions-Regelvorrichtung in einem ersten Abschnitt des Strömungswegs, einen Flüssigkeitsinjektor, der angeordnet ist, um eine Flüssigkeit in einen zweiten Abschnitt des Strömungsweges zu injizieren nach dem ersten Abschnitt und eine katalytische Abgasreinigungsanlage in einem dritten Teil des Strömungsweges nach dem zweiten Abschnitt, wobei der zweite Abschnitt eine Sammelkammer definiert und wirkt, um Abgas zu sammeln, wenn es die Emissions-Regelvorrichtung verlassen hat, wobei die Sammelkammer das Abgas einem Kontraktionsbereich des zweiten Abschnitts zuführt und der Kontraktionsbereich ein Rohr aufweist mit einem Teil, das in den Sammelraum ragt, um ein System bereitzustellen, das wirkungsvoll eine Flüssigkeit mit einem Abgas vermischt.

Aufgabe der Erfindung ist es, eine an Einbaubedingungen eines Kraftfahrzeugs angepasste Abgasanlage bereitzustellen, die eine gleichmäßigere Verteilung des Oxidations- oder Reduktionsmittels und somit eine effektivere Regeneration des Einlegers ermöglicht.

Dies wird dadurch erreicht, dass bei einer Abgasanlage der eingangs genannten Art der Abgasführungskanal zwischen Verwirbelungselement und Einleger, insbesondere zwischen Strömungsgleichrichter und Einleger, in einen unmittelbar stromaufwärts des Einlegers angeordneten Trichter mündet, der mit seiner Längsachse schräg zur Längsrichtung des Einlegers verläuft. Der Erfindung liegt die Überlegung zugrunde, nach einer vollständigen Durchmischung des Oxidations- oder Reduktionsmittels mit dem Abgas, also einer ausreichend langen Mischstrecke im Abgasführungskanal, den Abgasstrom wieder zu beruhigen, indem die durch das Verwirbelungselement erzeugten Turbulenzen durch einen Strömungsgleichrichter gedämpft bzw. herausgefiltert werden. Dadurch wird vor dem Einleger eine gleichförmige, verwirbelungsfreie oder -arme Strömung erzeugt, wodurch der Abgasstrom über den gesamten Querschnitt gleichmäßig verteilt auf den hinter dem Strömungsgleichrichter angeordneten Einleger auftreffen kann. Der gesamte Querschnitt des Einlegers kann so gleichmäßig durchströmt werden, wodurch die gesamte Fläche des Einlegers zur Reinigung des Abgases genutzt werden kann und auch eine effektive Regeneration des gesamten Einlegers sichergestellt ist.

Die Erfindung ist besonders bei der Verwendung diskontinuierlicher Oxidations- oder Reduktionsmittel-Einspritzsysteme von Bedeutung. Eine vollständige Durchmischung vor dem Eintrittstrichter des Einlegers kann nur mit einem Strömungsgleichrichter auf den Einleger übertragen werden. Wird kein Strömungsgleichrichter verwendet, kann es anhand von Rezirkulationsströmungen zu einer Art Entmischung kommen. Dies würde dazu führen, dass eine vollständige Durchmischung nicht auf den Einleger 'übertragen' werden kann.

Eine erneute Bildung von Turbulenzen zwischen Strömungsgleichrichter und Einleger wird dadurch verhindert, dass die Strecke zwischen Strömungsgleichrichter und Einleger möglichst kurz ausgebildet ist. Vorzugsweise ist der Strömungsgleichrichter aus diesem Grund unmittelbar vor dem Einleger angeordnet.

Um eine möglichst effektive Abgasreinigung bei einem geringen Strömungswiderstand zu ermöglichen, hat der Einleger einen wesentlich größeren Querschnitt als der Abgasführungskanal. Der Abgasführungskanal mündet deshalb zwischen Verwirbelungselement und Einleger in einem Trichter, der diese Querschnittsdifferenz ausgleicht. Insbesondere ist dieser Trichter zwischen Strömungsgleichrichter und Einleger angeordnet. Der Abgasführungskanal weitet sich also erst unmittelbar vor dem Einleger und nach der Beruhigung des Abgasstroms auf. Aufgrund der Ausrichtung der Abgasströmung durch den Strömungsgleichrichter kommt es auch bei der Querschnittsaufweitung des Abgasführungskanals im Trichter nicht zu einer erneuten starken Wirbelbildung.

Um eine erneute Wirbelbildung zu verhindern, ist der Trichter unmittelbar stromaufwärts des Einlegers angeordnet, so dass die Strecke zwischen Strömungsgleichrichter und Einleger möglich kurz gehalten werden kann. Aufgrund der Einbaubedingungen ist die Abgasanlage zudem nicht geradlinig im Fahrzeug bzw. am Unterboden des Fahrzeugs verlegt. Das heißt, der Einleger kann mit seiner Längsachse schräg zur Längsachse des Abgasführungskanals verlaufen. Diese Winkeldifferenz wird vorzugsweise durch den Trichter ausgeglichen, wobei die Längsachse des Trichters üblicherweise mit der Längsachse des Abgasführungskanals übereinstimmt, also schräg zur Längsachse des Einlegers verläuft. Das aufgeweitete Ende des Trichter ist entsprechend den Einbaubedingungen schräg abgeschnitten und der Geometrie des Einlegers angepasst.

Der Strömungsgleichrichter kann beispielsweise auf einfache Art dadurch gebildet sein, dass zumindest eine in Längsrichtung des Abgasführungskanals im Bereich des Strömungsgleichrichters verlaufende Wand, insbesondere ein Blech, vorgesehen ist, durch die der Abgasführungskanal in Teilkanäle mit geringerem Querschnitt unterteilt wird. Die Querschnitte der Teilkanäle sind so klein ausgebildet, dass in diesem keine Wirbelbildung erfolgen kann, bzw. die Ausbreitung bestehender Turbulenzen verhindert wird, so dass durch diese Unterteilung eine effektive Beruhigung des Abgasstroms erreicht wird.

Vorzugsweise weist der Strömungsgleichrichter deshalb mehrere in Längsrichtung des Abgasführungskanals verlaufende Teilkanäle auf, deren Querschnittsfläche so gering ist, dass in diesen keine Wirbel bzw. Rückströmungen entstehen können. Diese Teilkanäle sind beispielsweise durch mehrere in Längsrichtung des Abgasführungskanals verlaufende Wände gebildet.

Diese Wände können sich in Längsrichtung des Abgasführungskanals betrachtet kreuzen, so dass diese in Strömungsrichtung gesehen ein gitterartiges Muster bilden.

Die Kanäle weisen in diesem Fall einen mehreckigen Querschnitt, vorzugsweise einen sechseckigen Querschnitt auf. Ein solcher wabenförmiger, sechseckiger Querschnitt bietet den Vorteil, dass bei einer idealen Ausnutzung des Querschnitts Kanäle mit gleichem Querschnitt, also gleichem Strömungswiderstand bereitgestellt werden können.

Das Verwirbelungselement kann beispielsweise ein statischer Mischer sein, so dass keine beweglichen Teile im Abgasführungskanal angeordnet sind.

Ein solcher statischer Mischer ist beispielsweise ein Drallerzeugungselement (auch bekannt als Drallturbine), die eine starke Drallströmung in der Abgasanlage erzeugen kann, die über den gesamten Querschnitt der Abgasanlage bzw. des Abgasführungskanals reicht.

Der Einleger ist beispielsweise ein SCR-Katalysator.

Weitere Vorteile und Merkmale ergeben sich aus der nachfolgenden Beschreibung in Verbindung mit den beigefügten Zeichnungen. In diesen zeigen:
- Figur 1 eine vereinfachte Darstellung einer erfindungsgemäßen Abgasanlage;
- Figur 2 eine Detailansicht der Abgasanlage aus Figur 1;
- Figur 3 eine perspektivische Ansicht der Detailansicht aus Figur 2;
- Figur 4 eine Detailansicht der Einlegers und des Trichters der Abgasanlage aus Figur 1;
- Figur 5 eine Detailansicht des Strömungsgleichrichters der Abgasanlage aus Figur 1;
- Figur 6 eine idealisierte Darstellung der Strömungsverhältnisse in einer Abgasanlage ohne Strömungsgleichrichter; und
- Figur 7 eine idealisierte Darstellung der Strömungsverhältnisse in der erfindungsgemäßen Abgasanlage aus Figur 1 mit einem Strömungsgleichrichter.

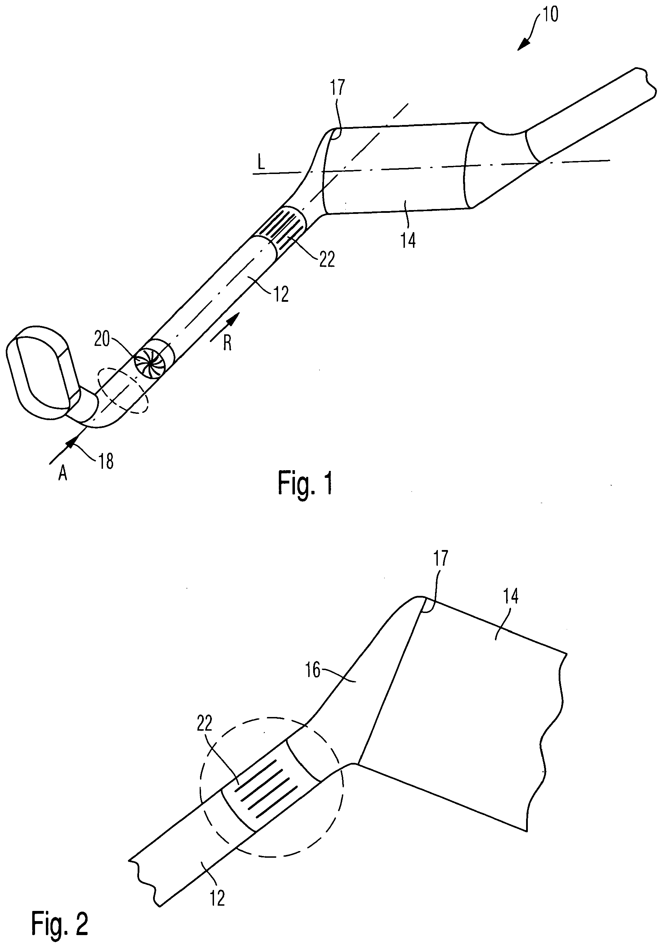

In Figur 1 ist eine Abgasanlage 10 für eine Verbrennungskraftmaschine, insbesondere für ein Fahrzeug, dargestellt, wobei die Abgasanlage 10 hier zur Darstellung des Funktionsprinzips stark stilisiert dargestellt ist. Üblicherweise weist eine solche Abgasanlage 10 eine komplexere Geometrie auf, die beispielsweise von den Einbaubedingungen im Fahrzeug bzw. am Unterboden des Fahrzeugs abhängig ist. Desweiteren ist die Abgasanlage 10 aus Gründen der Übersichtlichkeit auf die für die Beschreibung des Funktionsprinzips wesentlichen Bauteile reduziert.

Die Abgasanlage 10 hat einen Abgasführungskanal 12, der in einer Strömungsrichtung R vom Abgas durchströmt wird. Als Strömungsrichtung R wird hier die Hauptströmungsrichtung bezeichnet, in der ein idealisierter, gleichförmiger Abgasstrom ohne wesentliche Verwirbelungen durch den Abgasführungskanal 12 strömt.

Im Abgasführungskanal 12 ist ein Einleger 14 zur Reinigung des Abgases vorgesehen, wobei der Querschnitt des Einlegers 14 wesentlich größer ist als der Querschnitt des übrigen Abgasführungskanals 12, um den Strömungswiderstand der Abgasanlage 10 möglich gering zu halten und eine große Oberfläche zur Reinigung des Abgases zur Verfügung zu stellen. Um diese Querschnittsdifferenz auszugleichen, mündet der Abgasführungskanal 12 unmittelbar vor dem Einleger 14 in einen Trichter 16.

Wie in Figur 1 und insbesondere in Figur 2 zu sehen ist, verläuft die Längsachse L des Einlegers 14 aufgrund der Einbaubedingungen schräg zur Längsachse A des Trichters 16, die hier die Längsachse des Abgasführungskanals 12 ist. Um diesen Winkel ausgleichen, ist der Trichter 16 auf der dem Einleger 14 zugewandten Seite 17 abgeschrägt und der Geometrie des Einlegers 14 angepasst. Diese konstruktionsbedingte Schrägstellung der Längsachse L des Einlegers 14 sowie die Querschnittsaufweitung haben, wie im Folgenden gezeigt wird, auch Einfluss auf die Strömungsverhältnisse im Trichter 16 bzw. vor dem Einleger 14.

Der Einleger 14 ist hier ein SCR-Katalysator, der regelmäßig regeneriert werden muss, da sich sonst der Strömungswiderstand des Einlegers 14 erhöht bzw. die Reinigungsleistung des SCR-Katalysators nachlässt. Dies erfolgt durch ein Freibrennen, also eine starke Temperaturerhöhung im Einleger 14. Um eine solche Temperaturerhöhung zu bewirken, ist stromaufwärts eine Einspritzanlage 18 vorgesehen, die ein Reduktionsmittel, beispielsweise eine Harnstoff-Wasser-Lösung, in den Abgasstrom einspritzen kann.

Die Einspritzung erfolgt vorzugsweise vor einem linearen Abschnitt des Kanals 12 nach einem bogenförmigen Abschnitt.

Um eine gleichmäßige Verteilung des Reduktionsmittels im Abgas zu bewirken ist unmittelbar nach der Einspritzanlage 18 ein Verwirbelungselement 20, hier ein statisches Drallerzeugungselement, vorgesehen. Diese bewirkt eine starke Wirbelbildung im Abgasstrom, die zu einer starken Durchmischung des Reduktionsmittels mit dem Abgas führt.

Der Bereich des Abgasführungskanals 12 zwischen Verwirbelungselement 20 und Trichter 16 dient hier als Mischstrecke, auf der eine Durchmischung des Reduktionsmittels mit dem Abgas erfolgt. Die Länge dieser Mischstrecke ist so dimensioniert, dass am Ende der Mischstrecke, also beim Auftreffen des Abgasstroms auf den Einleger, eine vollständige Durchmischung von Reduktionsmittel und Abgas erfolgt ist.

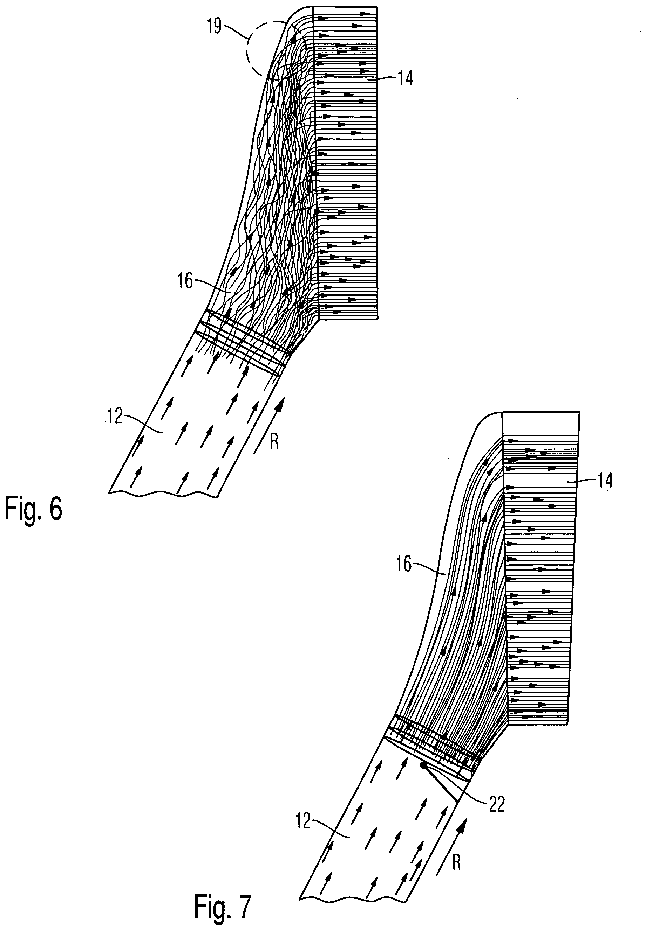

Aufgrund der erzeugten starken Turbulenzen kommt es aber im Abgasführungskanal 12 auch zu Rückströmungen und Druckdifferenzen. Diese werden durch die Querschnittsaufweitung im Trichter verstärkt, so dass es in diesem Bereich vermehrt zu Rezirkulationen kommen kann, wie dies beispielsweise in der idealisierten Darstellung der Strömungsverhältnisse in Figur 6 in dem mit 19 gekennzeichneten Bereich zu erkennen ist. Aufgrund der Schrägstellung des Einlegers 14 trifft zudem ein Teil des Abgasstroms früher auf den Einleger 14 und wird durch diesen abgebremst, wodurch die Wirbelbildung zusätzlich verstärkt wird. Der Abgasstrom trifft dadurch nicht gleichmäßig auf den Einleger auf, so dass dieser ungleichmäßig vom Abgasgemisch durchströmt wird. Das Reduktionsmittel wird dadurch nicht gleichmäßig im Einleger verteilt, so dass eine gleichmäßige Reduktion der Stickoxide des Einlegers 14 nicht sichergestellt ist.

Aus diesem Grund ist unmittelbar vor dem Trichter 16 ein Strömungsgleichrichter 22 vorgesehen (siehe auch Figuren 2 bis 4). Dieser dient, wie im Folgenden dargestellt wird, dazu, die durch das Verwirbelungselement 20 erzeugten Turbulenzen zu reduzieren bzw. diese vollständig zu beseitigen.

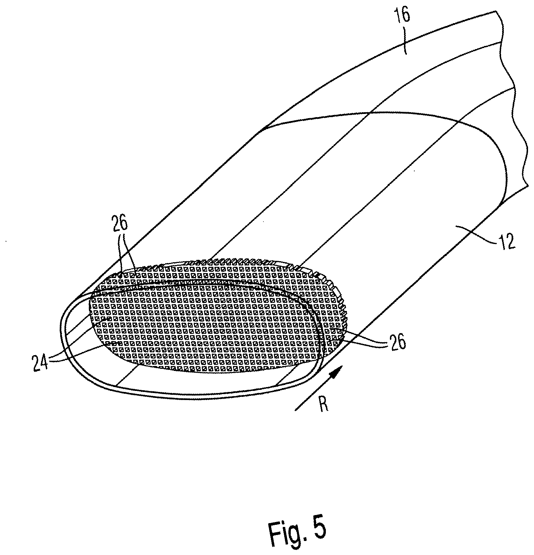

Wie insbesondere in Figur 5 zu sehen ist, weist der Strömungsgleichrichter mehrere in Längsrichtung des Abgasführungskanals 12 verlaufende Teilkanäle 24 auf. Diese sind durch mehrere in Längsrichtung des Abgasführungskanals verlaufende, sich kreuzende Wände 26 gebildet, die hier im Wesentlichen parallel zueinander und horizontal bzw. vertikal angeordnet sind, sodass diese jeweils viereckige Teilkanäle 24 definieren. Die Teilkanäle 24 können aber auch einen anderen Querschnitt aufweisen. Als besonders vorteilhaft haben sich hier beispielsweise sechseckige Querschnitte herausgestellt.

Der Querschnitt dieser Teilkanäle 24 ist so gering dimensioniert, dass sich in diesen keine Verwirbelungen bzw. Rückströmungen bilden können, bzw. die Ausbreitung bestehender Verwirbelungen gedämpft bzw. vollständig verhindert wird. Das heißt, das durch den Strömungsgleichrichter strömende Abgas bzw. Abgasgemisch wird gewissermaßen ausgerichtet, sodass eine gleichförmige laminare Strömung aus dem Strömungsgleichrichter 22 austritt und anschließend auf den Einleger auftrifft.

Die Strömungsverhältnisse mit einem solchen Gleichrichter sind schematisch in Figur 7 dargestellt. Die Turbulenzen, die im Abgasstrom vor dem Einleger zu sehen sind, werden durch den Strömungsgleichrichter 22 vollständig herausgefiltert, so dass hinter dem Strömungsgleichrichter 22 eine gleichförmige, laminare Strömung entsteht. Der Abgasstrom fächert sich nach dem Strömungsgleichrichter 22 zwar im Trichter 16 auf, aufgrund der Ausrichtung des Abgasstroms kommt es aber nicht mehr zur Bildung von Rezirkulationen oder Wirbel. Der Abgasstrom trifft gleichmäßig verteilt auf den gesamten Querschnitt des Einlegers 14 auf, so dass die gesamte Querschnittsfläche ideal ausgenutzt wird.

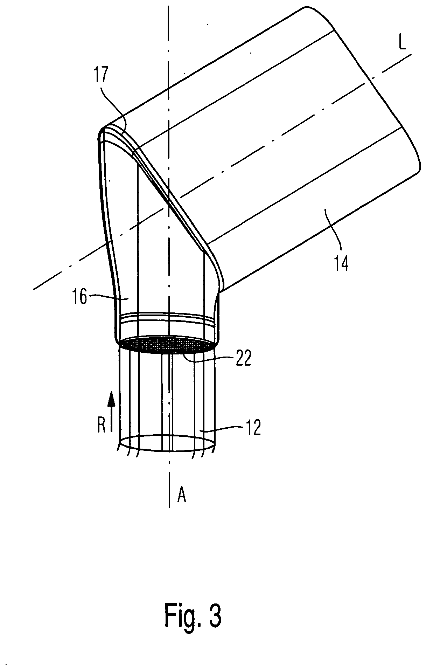

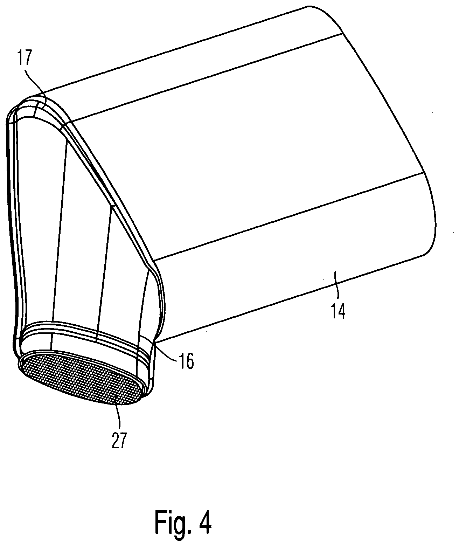

Wie auch in den Figuren 3 und 4 zu sehen ist, ist der Strömungsgleichrichter 22 unmittelbar vor dem Trichter 16 angeordnet, so dass die Strecke zwischen Strömungsgleichrichter 22 und Einleger 14 möglichst kurz ist. Es wäre auch denkbar, dass der Strömungsgleichrichter 22 im Trichter 16 bzw. nach dem Trichter 16 angeordnet ist. In jedem Fall muss aber zwischen Verwirbelungselement 20 und Strömungsgleichrichter 22 eine ausreichend lange Mischstrecke vorhanden sein, um eine ausreichende Vermischung von Reduktionsmittel und Abgas zu erzielen.

## Patentansprüche

1. Abgasanlage (10) einer Verbrennungskraftmaschine, insbesondere eines Fahrzeugs,
mit einem Abgasführungskanal (12),
zumindest einem im Abgasführungskanal (12) angeordneten Einleger (14) zur Reinigung des Abgases,
einer im Strömungsweg vor dem Einleger (14) angeordneten Einspritzanlage (18) und
einem zwischen Einspritzanlage (18) und Einleger (14) angeordneten Verwirbelungselement (20), wobei
im Abgasführungskanal (12) zwischen Verwirbelungselement (20) und Einleger (14) ein Strömungsgleichrichter (22) vorgesehen ist,
**dadurch gekennzeichnet, dass**
der Abgasführungskanal (12) zwischen Verwirbelungselement (20) und Einleger (14), insbesondere zwischen Strömungsgleichrichter (22) und Einleger (14), in einen unmittelbar stromaufwärts des Einlegers (14) angeordneten Trichter (16) mündet, der mit seiner Längsachse (A) schräg zur Längsrichtung (L) des Einlegers (14) verläuft.

2. Abgasanlage nach Anspruch 1, **dadurch gekennzeichnet, dass** der Strömungsgleichrichter (22) unmittelbar vor dem Einleger (14) angeordnetist.

3. Abgasanlage nach einem der vorhergehenden Ansprüche, **dadurch gekennzeichnet, dass** der Strömungsgleichrichter (22) zumindest eine in Längsrichtung des Abgasführungskanals (12) im Bereich des Strömungsgleichrichters (22) verlaufende Wand (26), insbesondere ein Blech aufweist.

4. Abgasanlage nach Anspruch 3, **dadurch gekennzeichnet, dass** mehrere in Längsrichtung des Abgasführungskanals (12) verlaufende Wände (26) vorgesehen sind, die mehrere in Längsrichtung des Abgasführungskanals (12) verlaufende Teilkanäle (24) definieren.

5. Abgasanlage nach Anspruch 4, **dadurch gekennzeichnet, dass** die Teilkanäle (24) einen mehreckigen Querschnitt, insbesondere einen sechseckigen Querschnitt aufweisen.

6. Abgasanlage nach einem der vorhergehenden Ansprüche, dadurch 5 gekennzeichnet, dass das Verwirbelungselement (20) ein statischer Mischer ist.

7. Abgasanlage nach einem der vorhergehenden Ansprüche, **dadurch gekennzeichnet, dass** das Verwirbelungselement (20) ein Drallerzeugungselement ist.

8. Abgasanlage nach einem der vorhergehenden Ansprüche, dadurch 10 gekennzeichnet, dass der Einleger (14) ein SCR-Katalysator ist.

## Claims

1. An exhaust gas system (10) of an internal combustion engine, especially of a vehicle, having an exhaust gas conveying duct (12),
at least one insert (14), arranged in the exhaust gas conveying duct (12), for cleaning the exhaust gas,
an injection system (18) arranged in the flow path upstream of the insert (14), and
a swirling element (20) arranged between injection system (18) and insert (14), wherein a flow rectifier (22) is provided in the exhaust gas conveying duct (12) between swirling element (20) and insert (14),
**characterised in that**
the exhaust gas conveying duct (12) runs into a funnel (16) between swirling element (20) and insert (14), especially between flow rectifier (22) and insert (14), which funnel is arranged immediately upstream of the insert (14) and runs with its longitudinal axis (A) obliquely to the longitudinal direction (L) of the insert (14).

2. An exhaust gas system according to claim 1, **characterised in that** the flow rectifier (22) is arranged directly upstream of the insert (14).

3. An exhaust gas system according to any of the preceding claims, **characterised in that** the flow rectifier (22) has at least one wall (26), especially a metal sheet, which extends in the longitudinal direction of the exhaust gas conveying duct (12) in the region of the flow rectifier (22).

4. An exhaust gas system according to claim 3, **characterised in that** a plurality of walls (26) are provided which run in the longitudinal direction of the exhaust gas conveying duct (12) and define a plurality of subducts (24) which extend in the longitudinal direction of the exhaust gas conveying duct (12).

5. An exhaust gas system according to claim 4, **characterised in that** the subducts (24) have a polygonal cross section, especially a hexagonal cross section.

6. An exhaust gas system according to any of the preceding claims, **characterised in that** the swirling element (20) is a static mixer.

7. An exhaust gas system according to any of the preceding claims, **characterised in that** the swirling element (20) is a swirl generator element.

8. An exhaust gas system according to any of the preceding claims, **characterised in that** the insert (14) is an SCR catalyst.

## Revendications

1. Installation de gaz d'échappement (10) d'un moteur à combustion interne, en particulier d'un véhicule comprenant :
un canal de guidage des gaz d'échappement (12),
au moins un insert (14) permettant d'épurer les gaz d'échappement montés dans le canal de guidage des gaz d'échappement (12),
une installation d'injection (18) montée en amont de l'insert (14) dans le trajet du flux, et
un élément de mise en turbulence (20) monté entre l'installation d'injection (18) et l'insert (14), et
dans le canal de guidage des gaz d'échappement (12), il est prévu un redresseur de flux (22) entre l'élément de mise en turbulence (20) et l'insert (14),
**caractérisée en ce que**
le canal de guidage des gaz d'échappement (12) débouche entre l'élément de mise en turbulence (20) et l'insert (14), en particulier entre le redresseur de flux (22) et l'insert (14) dans un entonnoir (16) situé directement en amont de l'insert (14), dont l'axe longitudinal (A) s'étend transversalement à la direction longitudinale (L) de l'insert (14).

2. Installation de gaz d'échappement conforme à la revendication 1,
**caractérisée en ce que**
le redresseur de flux (22) est installé directement en amont de l'insert (14).

3. Installation de gaz d'échappement conforme à l'une des revendications précédentes,
**caractérisée en ce que**
le redresseur de flux (22) comporte au moins une paroi (26) en particulier une tôle s'étendant dans la zone de ce redresseur de flux (22) dans la direction longitudinale du canal de guidage des gaz d'échappement (12).

4. Installation de gaz d'échappement conforme à la revendication 3,
**caractérisée en ce qu'**
il est prévu plusieurs parois (26) s'étendant dans la direction longitudinale du canal de guidage des gaz d'échappement (12) qui définissent plusieurs canaux partiels (24) s'étendant dans la direction longitudinale du canal de guidage des gaz d'échappement (12).

5. Installation de gaz d'échappement conforme à la revendication 4,
**caractérisée en ce que**
les canaux partiels (24) ont une section polygonale, en particulier une section hexagonale.

6. Installation de gaz d'échappement conforme à l'une des revendications précédentes,
**caractérisée en ce que**
l'élément de mise en turbulence (20) est un mélangeur statique.

7. Installation de gaz d'échappement conforme à l'une des revendications précédentes,
**caractérisée en ce que**
l'élément de mise en turbulence (20) est un élément générateur de tourbillons.

8. Installation de gaz d'échappement conforme à l'une des revendications précédentes,
**caractérisée en ce que**
l'insert (14) est un catalyseur SCR.
